# EUROPEAN PATENT SPECIFICATION

(11) **EP 1 505 095 B1**
(45) Date of publication and mention of the grant of the patent: **12.03.2008**
(21) Application number: 04425560.2
(22) Date of filing: 26.07.2004
(51) Int. Cl.: C08G 61/00

(54) **Pyrrolic polymeric compositions**
Pyrrolpolymerzusammensetzungen
Compositions de polyméres de pyrrole

(30) Priority: 01.08.2003 IT RM20030381
(43) Date of publication of application: 09.02.2005
(73) Proprietor: Technobiochip S.C.A.R.L, 57033 Marciana Marina (IT)
(72) Inventor: Scarpa, Antonio, c/o Technobiochip S.c.a.r.l., 57033 Marciana Marina (LI) (IT); Sineri, Angelo, c/o Technobiochip S.c.a.r.l., 57033 Marciana Marina (LI) (IT)
(74) Representative: Iannone, Carlo Luigi

(56) References cited:
- EP-A- 1 389 626
- WO-A-01/12699
- WO-A-03/000860
- DE-A- 3 607 302
- DE-A- 19 601 748
- GB-A- 2 321 863
- US-A- 4 929 389
- US-A- 5 591 482

## Description

The present invention concerns polymeric compositions, particularly for use as active matrix for sensors, especially nanogravimetric sensors, and a method for the preparation thereof.

More in particular, the invention refers to the field of matrixes for sensors used in the so-called electronic noses, i.e. those devices that, coupling a plurality of non selective chemical sensors with a data storing and processing system, are able to reproduce the functions of the sense of smell.

There are different circumstances when it is desirable to identify with extreme precision the presence in the environment of a specific compound or of a series of compounds, in the gas state. Reference is made, for example, to the need of monitoring the presence in the atmosphere of polluting agents, of identifying the emission, from food, of specific gases, indicating its preservation conditions, but also of allowing to identify in a quantitative objective manner the aroma of different foods, as well as of immediately identifying possible escapes of gas, which can occur inside industrial plants as well as in dwelling-houses.

Up to date, different kinds of electronic noses have been developed, all based on the same general operation principle, but often different with reference to the kind of sensor used. Particularly, sensors may be mass transducers or chemoresistors, based on the use of metal oxides or of semi-conductive polymers. An electronic nose uses a plurality of different sensors, each having a different response to different gas compounds to analyse. The analysis of different responses allows to reproduce the fingerprint of the odours that are being analysed.

The development of electronic noses based on the measuring of some polymer semi-conductive properties variations had a particular success, such properties being modified by the presence in the environment of specific chemical compounds.

A first kind of electronic nose belonging to this class is based on the polypyrrole, possibly doped, and other polymers, for example polythiophene, polyfuran, polychloroaniline, variation of the resistance due to the contact with particular kinds of gases. In particular, each sensors according to this technology comprises a couple of electrods separated from each other, linked by the semi-conductive polymer. The polymer resistance variation, which can undergo an increase or a decrease, is measured on a measuring electric circuit.

A second kind of electronic noses are comprised of sensors wherein a semi-conductive organic polymeric material coating is located on a field effect transistor. The conductivity variations, due to the exposition to different gases or odours, can be identified by measuring capacitance variations.

Sensors based on the measuring of a semi-conductive polymer impedance variation, on which polymer an intermittent signal is applied, are also known.

A further kind of solution makes use of nanogravimetric sensors, set up by oscillating quartz, coated with materials which can chemically interact with the gases dispersed in the environment, in particular tetrapyrrolic compounds such as metal porphirins and metal phthalocyanines. These sensors base their transduction principle on an oscillation frequency variation, due to nanogravimetric variations; in fact, when the chemical species which are present in the environment reversibly bind themselves with chemically interactive materials, the structure become heavier, causing a quartz oscillation frequency variation. This variation represents the value of interest for the olfactory data analysis. In this case also, providing the electronic nose with a plurality of these sensors, differing from each other by virtue of the different nature of the chemical materials covering the oscillating quartz, a plurality of variations is obtained, generally different from each other, containing all the information regarding the synergy (odour) of the chemical species composing the atmosphere. Chemical interactive materials operate as receptors, while quartz microbalances represent transducers. Sensors sensitivity to different chemical species (in terms of selectivity and sensitivity) can be changed simbly by substituting the metal placed in the centre of the structure, or the structure peripheral substituents. This last kind of sensors allowed the realization of particularly accurate and versatile electronic noses.

However, tetrapyrrolic compounds, such as metal phthalocyanines and metal porphirins, even though they are excellent sensor matrixes, present some limitations which make their use not always optimal.

For example, these compounds deposition over oscillating quartz, till now obtained by spray casting method, Langmuir-Blodgett method, or by Langmuir-Sheffer method, is not able to firmly fix them to the substrate. In fact, the formation of whatever organic solvent condensate (such as chloroform, acetone or ethyl alcohol) is sufficient to risk the washing away of the sensor surface, thus compromising the functioning thereof.

A further limitation is constituted by the long and expensive organic synthesis process needed to produce tetrapyrrolic compounds.

In this context is included the solution according to the present invention, aiming to provide new organic polymeric compounds, having a good resistance to various organic solvents, and especially can be obtained through a synthesis process that is simple to realise.

These and other results are obtained according to the present invention providing a new group of polymeric compounds that can be used as sensors, a method for the production thereof and for their deposition over suitable substrates, as well as their use in sensors and sensors in which said compounds are used.

It is therefore a first object of the present invention a group of pyrrolic polymeric compounds having one of the following general formula: 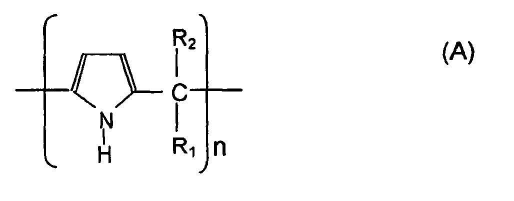 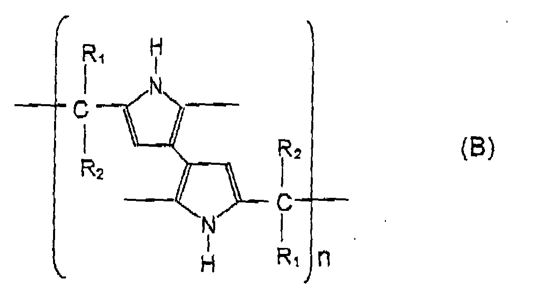 wherein R1 and R2 represent an alkylic group, straight or branched, a cyclic group, an aromatic group, an alkyl aromatic group or an heterocyclic group.

Preferably, according to the invention, said polymeric compound are selected from the group comprising: Poly [2-4(methoxybenzyl)-1H-pyrrole, Poly [2-(thyen-2-yl-methyl)-1H-pyrrole, Poly 2-(benzyl)-1H-pyrrole, Poly [2-(H-pyrrol-2-yl-m ethyl)-4H-chromen-4-one, Poly [2-(-9phenanthrylmethyl)-1H-pyrrole, Poly {2-[(2E-3,7-dimethylocta-2,6-dienyl]-1H-pyrrole}, Poly [2-hetoxy-5-(H-pyrrol-2-yl-methyl)phenol], Poly {2-[2-(2E)-3-phenylprop-2-enyl]-1H-pyrrole}, Poly [2-sec-butyl-1H-pyrrole], Poly {2-[(4E-1,5,9-trimethyldeca-4,8-dienil]-1H-pyrrole, Poly {2-[(2S,5R)-2-isopropyl-5-methylcyclohesyl]-1H-pyrrole}, Poly [2-sec-butyl-1H-pyrrole].

Further, it is a second specific object of the invention a method of preparation of straight chain pyrrolic polymeric compounds of general formula (A) or (B) comprising the following steps:
- mixing an equimolar quantity of pyrrole and a compound having an aldehyde or ketone functional group in a suitable solvent (depending from the reactans quantity), maintaining the solution stirred, optionally under an inert gas stream,
- adding to the solution an amount of Lewis acids, such as BF₃ or AlCl₃, and/or of strong acids, such as trifluoroacetic acid, said amount being determined in order to cause the reactans complete reaction, and which can further comprise the following step, following the step of addition of acids,
- purging by a series of washing with organic solvent.

Preferably, according to the invention, said washing organic solvent are selected from petroleum ether, methanol, chloroform, used alone or in combination, while said reactans dilution solvent is selected from chloroform and dichloromethane, alone or in combination.

It is a further specific object of the present invention the use of the pyrrolic polymeric compounds as previously defined as sensors, as an active matrix for nanogravimetric sensors, as an active matrix for nanogravimetric sensors on oscillating quartz.

Further, a specific object of the present invention is a method of deposition of straight-chain pyrrolic polymeric compounds of general formula (A) over a substrate, by Langmuir Blodget method or by spray-casting method.

Still according to the invention, a further specific object is a method of deposition of pyrrolic polymeric compounds as previously defined over a substrate, comprising the following steps:
- depositing on the surface of said substrate an equimolar solution of pyrrole and a compound having an aldehyde or ketone functional group in chloroform,
- blowing air saturated with Lewis acid vapours, such as BF₃, and/or strong acids, such as trifluoroacetic acid, over the surface of the substrate, until the polymerisation completion, highlighted by the surface colour change,
- washing with organic solvent.

Preferably, according to the invention, said washing organic solvent are selected from acetone and chloroform, alone or in combination.

Further, it is a specific object of the invention a sensor based on a pyrrolic polymeric compound as previously defined, a nanogravimetric sensor wherein the active matrix is constituted by a pyrrolic polymeric compound as previously defined and a nanogravimetric sensor on oscillating quartz wherein said oscillating quartz is at least partially coated with a pyrrolic polymeric compound as previously defined.

Finally, it is a further specific object of the present invention an oscillating quartz, at least partially coated with a pyrrolic polymeric compound as previously defined.

The invention will be described in the following for illustrative, but not limiting, purposes, making reference particularly to some illustrative examples and to the enclosed figures, wherein:
- Figure 1 shows a diagram in which the oscillation period frequency variation of oscillating quartz coated with different polymeric compounds according to the present invention, is measured as a function of the time, during a series of measurements on some essential oils,
- Figure 2 shows a Principal Components Analysis (PCA) diagram with respect to the first and second principal component of the data regarding the acquisitions, shown in Figure 1,
- Figure 3 shows a diagram in which the oscillation period frequency variation of oscillating quartz coated with different polymeric compounds according to the present invention, is measured as a function of the time, during a series of measurements on some common use organic compounds, and
- Figure 4 shows a Principal Components Analysis (PCA) diagram with respect to the first and second principal component of the data regarding the acquisitions, shown in Figure 3.

### Example 1. Method of synthesis of straight chain pyrrolic polymeric compounds.

An equimolar quantity of 0,43 mol of pyrrole (molecular weight 67,09), equal to 30 ml, and of 0,43 mol of benzaldehyde (molecular weight 106), equal to 40 ml, was mixed in 100 ml of chloroform and maintained under magnetic agitation, under nitrogen stream.

An excess quantity of BF₃-OEt₂, was then added, drop by drop, until the reaction completion, verified through the control of the disappearing of the starting products, made by thin-layer chromatography. The reaction that occurs is the following:

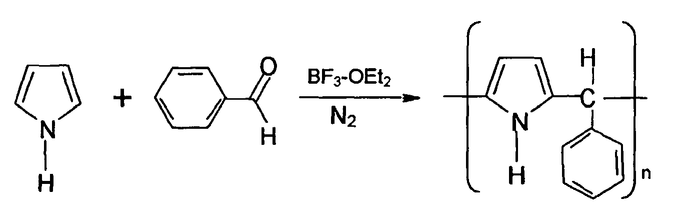

Generally, adding a compound having an aldehyde functional group to pyrrole, the reaction scheme is the following: 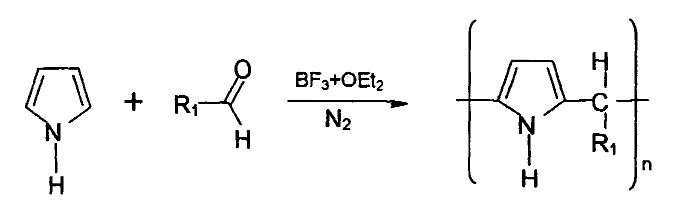 wherein R1 is an alkylic group, straight or branched, a cyclic group, an aromatic group, an alkyl aromatic group or an heterocyclic group.

The reaction crude subsequently underwent a crystallisation purification sequence through washings with solvents (petroleum ether, methanol, chloroform).

The same treatment was used in the case of compounds having a ketone functional group. In such a case, an equimolar quantity of 0,5 mol of pyrrole (molecular weight 67,09), corresponding to 35,4 ml, and of 0,5 mol of acetone (molecular weight 58,08), correspomding to 36,7 ml, was mixed in 100 ml of chloroform, maintained under nitrogen and under magnetic agitation, adding, drop by drop, an excess of BF₃, until the reaction is completed, i.e. until the disappearance of the staring products, controlled by means of thin-layer chromatography. In such a case the scheme of reaction is the following:

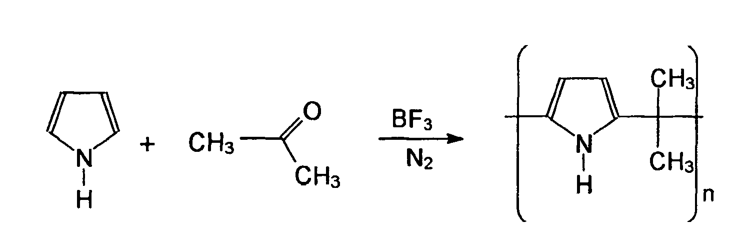

More generally, using a compound with a ketone functional group, the scheme of reaction is the following: 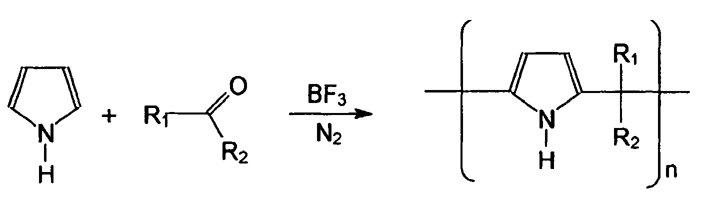 wherein R1 and R2 are an alkylic group, straight or branched, a cyclic group, an aromatic group, an alkyl aromatic group or an heterocyclic group. In table 1 are reproduced some examples of polymers synthesised with this method.

**Table 1**

| | | |
|---|---|---|
| 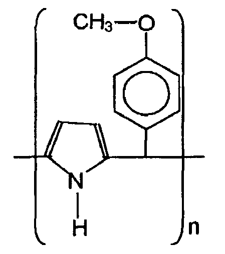 | 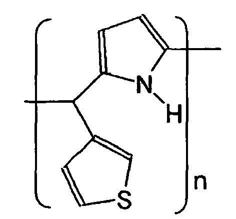 | 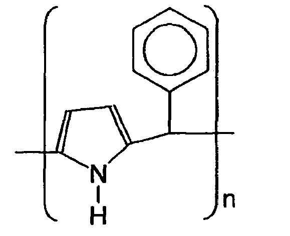 |
| Poly[2-4(methoxybenzyl)-1H-pyrrole | Poly[2-(thien-2-yl-methyl)-1H-pyrrole | Poly2-(benzyl)-1H-pyrrole |
| 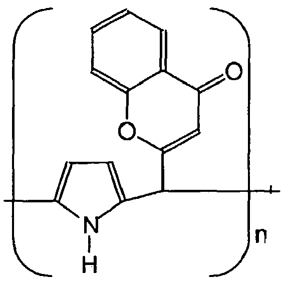 | 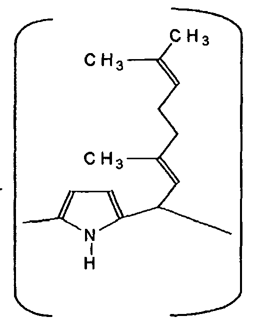 | 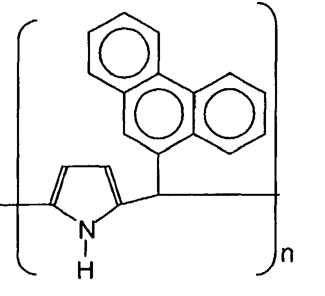 |
| Poly[2-(1H-pyrrol-2-yl-methyl)-4H-chromen-4-one. | Poly{2-[(2E-3,7-dimethylocta-2,6-dienyl]-1H-pyrrole} | Poly[2-(-9phenanthrilmethyl)-1 H-pyrrole |
| 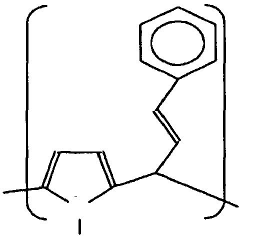 | 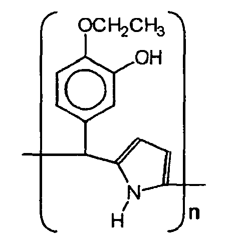 | 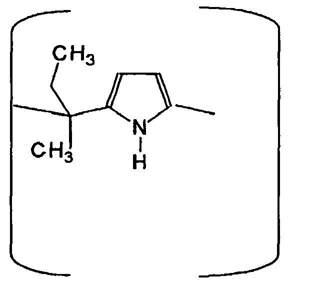 |
| Poly{2-[2-(2E)-3-phenylprop-2-enyl]-1H-pyrrole} | Poly[2hetoxy-5-(1H-pyrrol-2-yl-methyl)phenol | Poly[2-sec-butyl-1H-pyrrole] |
| 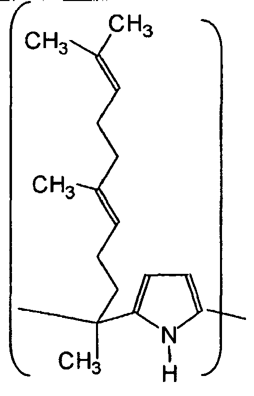 | 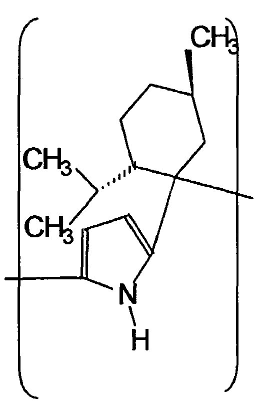 | 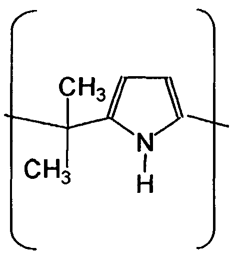 |
| Poly{2-[(4E-1,5,9-trimethyldeca-4,8-dienyl]-1H-pyrrole} | Poly{2-[(2S,5R)-2-isopropyl-5-methylcyclohexyl]-1H-pyrrole} | Poly[2-isopropyl-1H-pyrrole] |

Such straight-chained polypyrro-compound are easily synthesised and can be deposited via LB (Langmuir-Blodget) method or via spray-casting, obtaining low-cost polymers, easy to synthesise, deposited on oscillating quartz as nanogravimetric sensor active matrix.

### Example 2. Method of synthesis of branched chain pyrrolic polymeric compounds.

When the polymerisation reaction of pyrrole with a compound having an aldehyde or ketone functional group, of the kind already seen in the previous example, is carried out in ambient conditions, i.e. in the presence of oxygen and not under nitrogen stream, branched polypyrro-compound are obtained which are insoluble in organic solvents, such as ethylic alcohol, acetone, chloroform and even in aggressive chemical agents.

The scheme of reaction of pyrrole with a compound having an aldehyde functional group in ambient condition is the following: 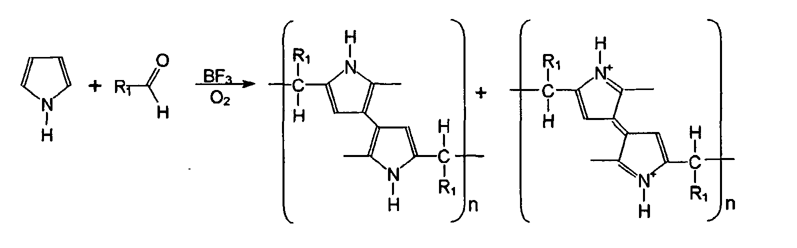 wherein R1 is an alkylic group, straight or branched, a cyclic group, an aromatic group, an alkyl aromatic group or an heterocyclic group.

The ambient condition polymerisation already seen for the aldehydes, was also realised for compounds having a ketone functional group. Even in this case polypyrro-compounds where obtained, which are insoluble in organic solvents, according to the following reaction: 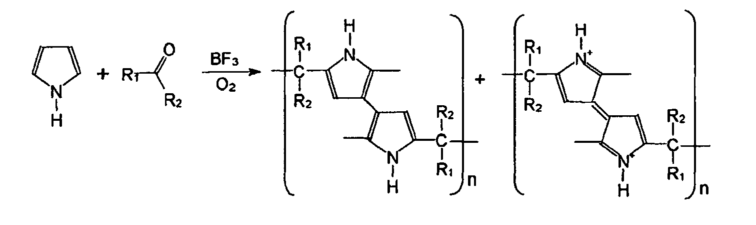 wherein R1 and R2 are an alkylic group, straight or branched, a cyclic group, an aromatic group, an alkyl aromatic group or an heterocyclic group.

### Example 3. Method of deposition of pyrrolic polymeric compounds over oscillating quartz.

In the case of branched polypyrro-compounds, which are insoluble, it was needed to develop a method to cause the polimerisation to occur directly over the oscillating quartz. This method resulted to be useful also for the deposition of straight polypyrro -compounds, thus constituting, in such a case, an alternative to already known methods.

According to a first example realised in laboratory, µl of an equimolar composition, containing 0,0043 mol, that is 0,3 ml, of pyrrole and 0,0043 mol, that is 0,4 ml, of benzaldehyde, were deposited on the gold surface of an oscillating quartz.

Likewyse, in a second example, 2µl of an equimolar solution, containing 0,005 mol, that is 0,35 ml, of pyrrole and 0,005 mol, that is 0,37 ml, of benzaldehyde, were deposited on the golden surface of an oscillating quartz.

In both cases, by means of a spray gun it was therefore over the surface of the so prepared quartz, an air stream saturated with BF₃ vapours. The finishing of the polymerisation was identified through the colour change of the quartz surface.

The quartz, coated with the polypyrro-compound, was washed with acetone and chloroform, the portion which was not washed with such solvents being constituted of branched polymer, firmly adhering to the sensor surface.

### Example 4. Essential oil vapours detection by means of an electronic nose based on nanogravimetric sensors constituted of oscillating quartzes coated with pyrrolic polymeric compounds.

A series of oscillating quartzes of 20Mhz, whose surface was modified with different pyrrolic polymeric compounds of the kind obtained according to the previous examples, was placed in an electronic nose, to verify the polymers functionality during a series of measurements on some essential oils, in particular lavender, eucalyptus and rosemary.

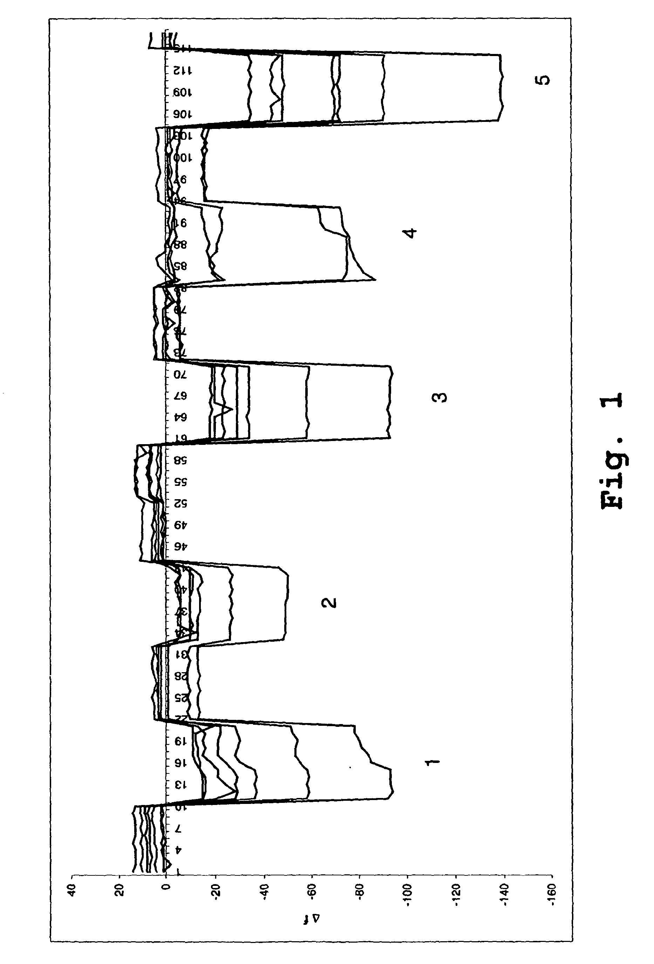

The electronic detection system connected to the sensors showed the graphic reproduced in figure 1, wherein on the ordinates is represented the frequency variation due to the presence of a determined essential oil, while on the abscissas there is the measurement time. In particular, a first variation 1 is shown, due to the presence in the air of lavender vapours, a second variation 2, identifying the eucalyptus, a variation 3, again due to the presence of lavender, a variation 4, related to rosemary and a variation 5, identifying the presence at the same time of lavender and rosemary. This first kind of measurement allowed to determine that nanogravimetric sensors, in which the active matrix is constituted of pyrrolic polymeric compounds according to the present invention, are sensitive to the presence in the air of essential oil vapours. The graphic further allows to determine how the response of the same sensor is different for each essential oil and also how the response generated by the same essential oil is different for each sensor.

The data regarding the acquisitions, showed in figure 1, were subsequently analysed using a Principal Components Analysis (PCA) using a standard data analysis method.

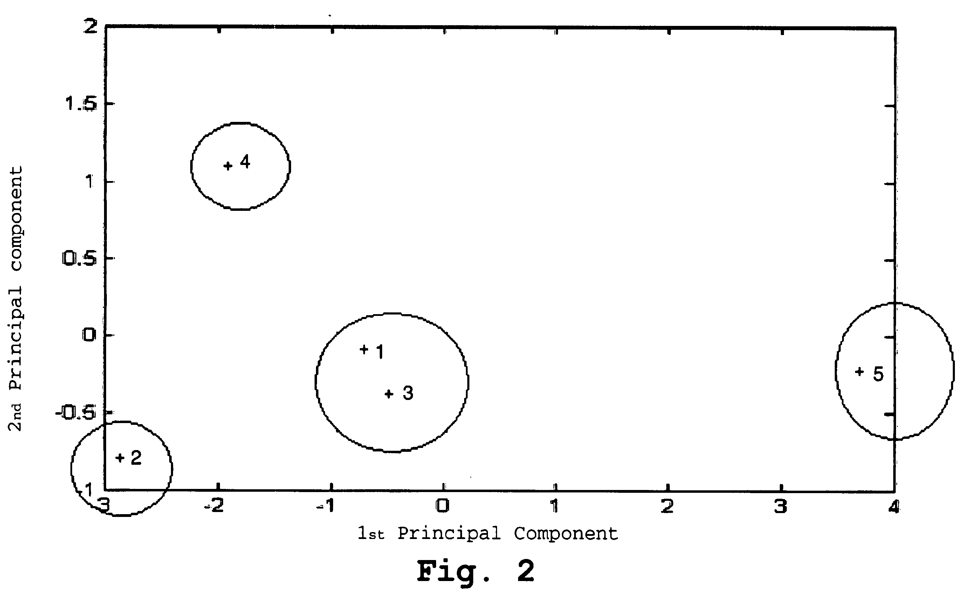

The PCA results with respect to the first and second principal component were reproduced in figure 2. It is noted the possibility to identify the different essential oils, highlighted by the clean separation on the diagram of the points identifying different oils (the different compounds identification numbers are the same employed in figure 1). It follows that the pyrrolic polymeric compounds of the invention, deposited on oscillating quartzes, resulted to be able to discriminate between different essential oils molecules.

### Example 5. Common organic compounds detection by means of an electronic nose based on nanogravimetric sensors constituted of oscillating quartzes coated with pyrrolic polymeric compounds.

The same electronic nose used in the previous example, was employed to verify the polymers functionality during a series of measurements on some common use organic compounds, in particular acetic acid, isopropyl alcohol, ethanol, trichloroanisole.

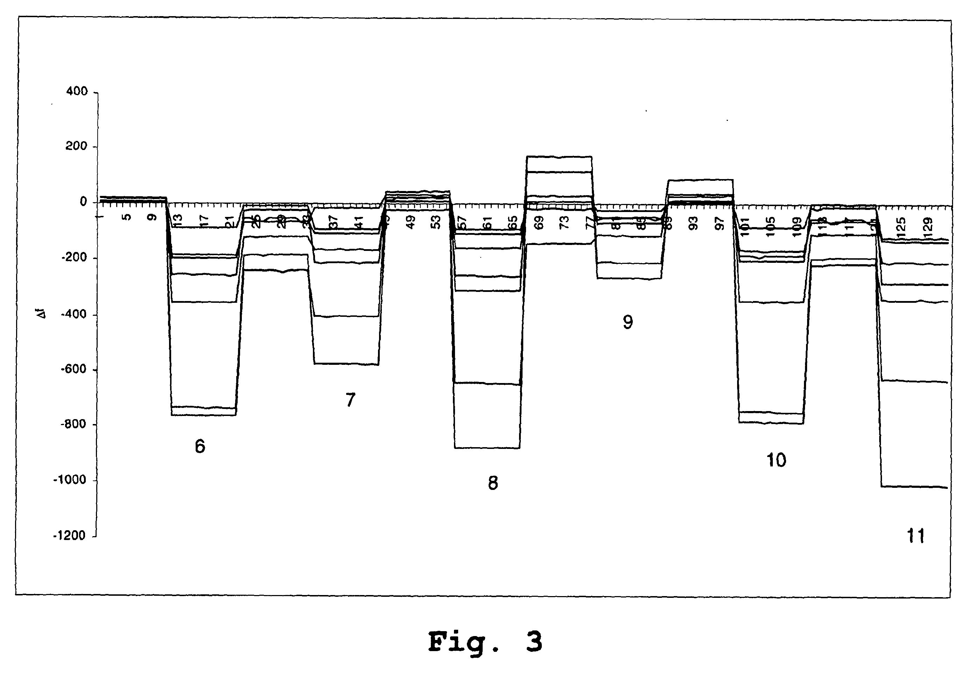

The electronic detection system connected to the sensors showed the graphic reproduced in figure 3, wherein on the ordinates is represented the frequency variation due to the presence of a determined organic compound, while on the abscissas there is the measurement time.

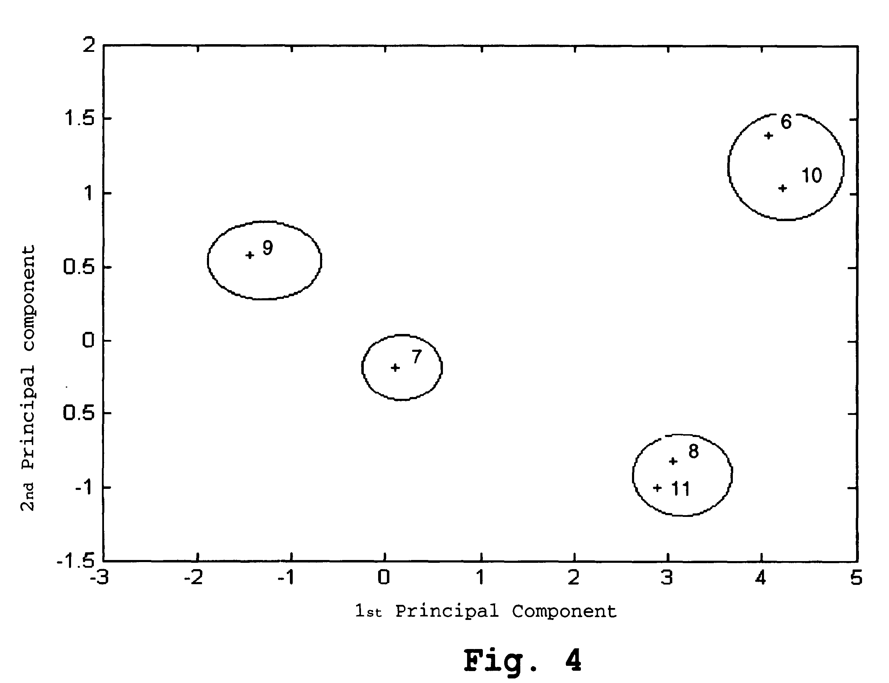

In this case also, the data regarding the acquisitions, showed in figure 3, were subsequently analysed using a Principal Components Analysis (PCA) using a standard data analysis method. In figure 3 and 4 the identification numbers identify acetic acid 6 and 10, isopropyl alcohol 7, ethanol 8 and 11, trichloroanisole 9, respectively.

The PCA results with respect to the first and second principal component, reproduced in figure 4, highlight how the same polymers are able to discriminate a series of organic compound. It is possible to infer that such polymers result to be potentially and advantageously used as an active matrix for nanogravimetric sensors.

The present invention was disclosed for illustrative, non limitative purposes, according to its preferred embodiments, but it must be understood that changes and/or modifications can be occasioned by the skilled in the art without coming out from the related scope of protection, as defined from the enclosed claims.

## Claims

1. Pyrrolic polymeric compounds having one of the following general formulas: 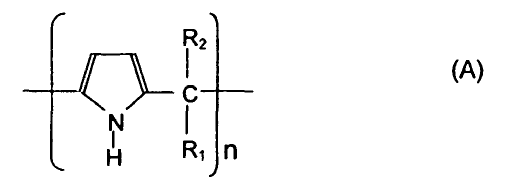 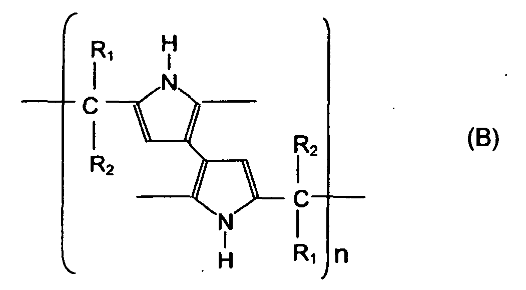 wherein R1 and R2 represent an alkylic group, straight or branched, a cyclic group, an aromatic group, an alkyl aromatic group or an heterocyclic group.

2. Polymeric compounds according to claim 1, selected from the group comprising: Poly [2-4(methoxybenzyl)-1H-pyrrole, Poly [2-(thyen-2-yl-methyl)-1H-pyrrole, Poly 2-(benzyl)-1H-pyrrole, Poly [2-(1H-pyrrol-2-yl-methyl)-4H-chromen-4-one, Poly [2-(-9phenanthrylmethyl)-1H-pyrrole, Poly {2-[(2E-3,7-dimethylocta-2,6-dienyl]-1H-pyrrole}, Poly [2-hetoxy-5-(1 1H-pyrrol-2-yl-methyl)phenol], Poly {2-[2-(2E)-3-phenylprop-2-enyl]-1 H-pyrrole}, Poly [2-sec-butyl-1H-pyrrole], Poly {2-[(4E-1,5,9-trimethyldeca-4,8-dienil]-1H-pyrrole, Poly {2-[(2S,5R)-2-isopropyl-5-methylcyclohesyl]-1H-pyrrole}, Poly [2-sec-butyl-1H-pyrrole].

3. A method of preparation of straight chain pyrrolic polymeric compounds of general formula (A), comprising the following steps:
- mixing an equimolar quantity of pyrrole and a compound having an aldehyde or ketone functional group in a suitable solvent (depending from the reactans quantity), maintaining the solution stirred, under an inert gas stream,
- adding to the solution an amount of Lewis acids, such as BF₃ or AlCl₃, and/or of strong acids, such as trifluoroacetic acid, said amount being determined in order to cause the reactans complete reaction.

4. A method according to claim 3, further comprising the following step, following the step of addition of acids,
- purging by a series of washing with organic solvent.

5. A method according to claim 4, wherein said washing organic solvent are selected from petroleum ether, methanol, chloroform, used alone or in combination.

6. A method according to any of claims 3-5, wherein said reactans dilution solvent is selected from chloroform and dichloromethane, alone or in combination.

7. Use of the pyrrolic polymeric compounds as defined in any of claims 1 and 2, as sensors.

8. Use of the pyrrolic polymeric compounds as defined in any of claims 1 and 2, as active matrix of nanogravimetric sensors.

9. Use of the pyrrolic polymeric compounds as defined in any of claims 1 and 2, as as active matrix of nanogravimetric sensors on oscillating quartz.

10. A method of deposition of straight-chain pyrrolic polymeric compounds of general formula (A) over a substrate, by Langmuir Blodget method.

11. A method of deposition of straight-chain pyrrolic polymeric compounds of general formula (A) over a substrate, by spray-casting method.

12. A method of deposition of pyrrolic polymeric compounds as defined in claims 1 and 2 over a substrate, comprising the following steps:
- depositing on the surface of said substrate an equimolar solution of pyrrole and a compound having an aldehyde or ketone functional group in chloroform,
- blowing air saturated with Lewis acid vapours, such as BF₃, and/or strong acids, such as trifluoroacetic acid, over the surface of the substrate, until the polymerisation completion, highlighted by the surface colour change,
- washing with organic solvent.

13. A method of deposition of pyrrolic polymeric compounds over a substrate, according to claim 12, wherein said washing organic solvent are selected from acetone and chloroform, alone or in combination.

14. Sensor based on a pyrrolic polymeric compound as defined in claim 1 or 2.

15. Nanogravimetric sensor wherein the active matrix is constituted by a pyrrolic polymeric compound as defined in claim 1 or 2.

16. Nanogravimetric sensor on oscillating quartz wherein said oscillating quartz is at least partially coated with a pyrrolic polymeric compound as defined in claim 1 or 2.

17. Oscillating quartz, at least partially coated with a pyrrolic polymeric compound as defined in claim 1 or 2.

## Patentansprüche

1. Polymere Pyrrol-Verbindungen mit einer der folgenden allgemeinen Formeln: 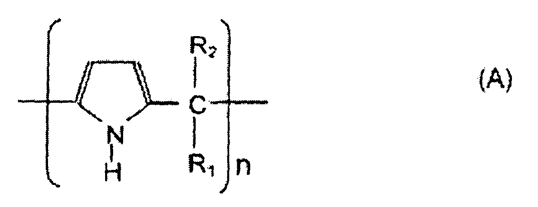 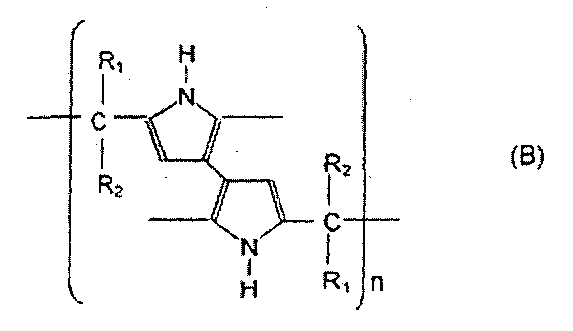 worin R1 und R2 eine Alkylgruppe, geradkettig oder verzweigt, eine cyclische Gruppe, eine aromatische Gruppe, eine alkylaromatische Gruppe oder eine heterocyclische Gruppe repräsentieren.

2. Polymere Verbindungen nach Anspruch 1, ausgewählt aus der Gruppe, welche umfasst: Poly[2-4(methoxybenzyl)-1H-pyrrol], Poly[2-(thien-2-yl-methyl)-1H-pyrrol], Poly[2-(benzyl)-1H-pyrrol], Poly[2-(1H-pyrrol-2-yl-methyl)-4H-chromen-4-on], Poly[2-(-9-phenanthrylmethyl)-1H-pyrrol], Poly{2-[(2E-3,7-dimethylocta-2,6-dienyl]-1H-pyrrol}, Poly[2-hetoxy-5-(1H-pyrrol-2-yl-methyl)phenol], Poly{2-[2-(2E)-3-phenylprop-2-enyl]-1H-pyrrol}, Poly[2-sec-butyl-1H-pyrrol], Poly{2-[(4E-1,5,9-trimethyldeca-4,8-dienyl]-1H-pyrrol}, Poly{2-[(2S,5R)-2-isopropyl-5-methylcyclohesyl]-1H-pyrrol}, Poly[2-sec-butyl-1H-pyrrol].

3. Verfahren zur Herstellung geradkettiger polymerer Pyrrol-Verbindungen der allgemeinen Formel (A), umfassend die folgenden Schritte:
- Mischen einer äquimolaren Menge von Pyrrol und einer Verbindung mit einer funktionellen Aldehyd- oder Keto-Gruppe in einem geeigneten Lösungsmittel (abhängig von der Reaktantenmenge), Halten der Lösung unter Rühren unter einem inerten Gasstrom,
- Zugeben zu der Lösung einer Menge von Lewis-Säuren, wie z.B. BF₃ oder AlCl₃, und/oder von starken Säuren, wie z.B. Trifluoressigsäure, wobei die Menge so festgelegt wird, dass die vollständige Umsetzung der Reaktanten bewirkt wird.

4. Verfahren nach Anspruch 3, umfassend ferner den folgenden Schritt, nach dem Schritt der Zugabe von Säuren,
- Spülen durch eine Reihe von Waschschritten mit einem organischen Lösungsmittel.

5. Verfahren nach Anspruch 4, wobei das organische Wasch-Lösungsmittel aus Petrolether, Methanol, Chloroform, alleine oder in Kombination verwendet, ausgewählt ist.

6. Verfahren nach einem der Ansprüche 3 bis 5, wobei das Verdünnungs-Lösungsmittel für die Reaktanten aus Chloroform und Dichlormethan, alleine oder in Kombination, ausgewählt ist.

7. Verwendung der polymeren Pyrrol-Verbindungen wie in irgendeinem der Ansprüche 1 und 2 definiert als Sensoren.

8. Verwendung der polymeren Pyrrol-Verbindungen wie in irgendeinem der Ansprüche 1 und 2 definiert als aktive Matrix von nanogravimetrischen Sensoren.

9. Verwendung der polymeren Pyrrol - Verbindungen wie in irgendeinem der Ansprüche 1 und 2 definiert als aktive Matrix von nanogravimetrischen Sensoren auf einem Schwingquarz.

10. Verfahren zur Abscheidung von geradkettigen polymeren Pyrrol-Verbindungen der allgemeinen Formel (A) auf einem Substrat mittels Langmuir-Blodget-Verfahren.

11. Verfahren zur Abscheidung von geradkettigen polymeren Pyrrol-Verbindungen der allgemeinen Formel (A) auf einem Substrat mittels eines Sprüh-Gieß-Verfahrens.

12. Verfahren zur Abscheidung von polymeren Pyrrol-Verbindungen wie in den Ansprüchen 1 und 2 definiert auf einem Substrat, umfassend die folgenden Schritte:
- Abscheiden einer äquimolaren Lösung von Pyrrol und einer Verbindung mit einer funktionellen Aldehyd- oder Keto-Gruppe in Chloroform auf der Oberfläche des Substrats,
- Blasen von Luft, die mit Lewis-Säure-Dämpfen, wie z.B. BF₃, und/oder starken Säuren, wie z.B. Trifluoressigsäure, gesättigt ist, über die Oberfläche des Substrats bis zur Beendigung der Polymerisation, angezeigt durch die Veränderung der Oberflächenfarbe,
- Waschen mit einem organischen Lösungsmittel.

13. Verfahren zur Abscheidung von polymeren Pyrrol-Verbindungen auf einem Substrat nach Anspruch 12, wobei das organische Wasch-Lösungsmittel aus Aceton und Chloroform, alleine oder in Kombination, ausgewählt ist.

14. Sensor, basierend auf einer polymeren Pyrrol-Verbindung wie in Anspruch 1 oder 2 definiert.

15. Nanogravimetrischer Sensor, wobei die aktive Matrix aus einer polymeren Pyrrol Verbindung wie in Anspruch 1 oder 2 definiert aufgebaut ist.

16. Nanogravimetrischer Sensor auf einem Schwingquarz, wobei der Schwingquarz mindestens teilweise mit einer polymeren Pyrrol-Verbindung wie in Anspruch 1 oder 2 definiert beschichtet ist.

17. Schwingquarz, der mindestens teilweise mit einer polymeren Pyrrol-Verbindung wie in Anspruch 1 oder 2 definiert beschichtet ist.

## Revendications

1. Composés polymères de pyrrole répondant à l'une des formules suivantes : 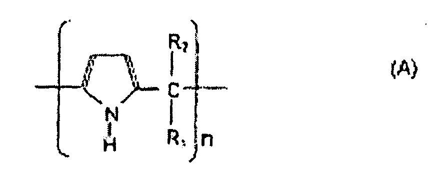 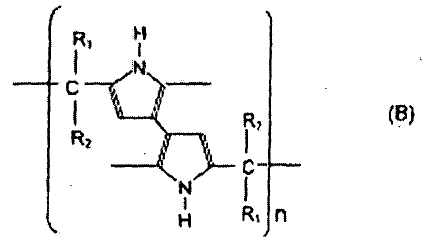 dans lesquelles R₁ et R₂ représentent un groupe alkyle linéaire ou ramifié, un groupe cyclique, un groupe aromatique, un groupe alkyle aromatique, ou un groupe hétérocyclique.

2. Composés polymères selon la revendication 1, choisis dans le groupe comprenant : le poly-[2-4-(méthoxybenzyl)-1H-pyrrole, le poly-[2-(thién-2-yl-méthyl)-1H-pyrrole, le poly-2-(benzyl)-1H-pyrrole, le poly-[2-(1H-pyrrol-2-yl-méthyl)=4H-chromén-4-one, le poly-[2-(9-phénanthryl-méthyl)-1H-pyrrole, le poly-{2-[(2E-3,7-diméthylocta-2,6-diényl]-1H-pyrrole}, le poly-[2-éthoxy-5-(1H-pyrrol-2-yl-méthyl)-phénol], le poly-{2-[2-(2E)-3-phénylprop-2-ényl]-1H-pyrrole}, le poly-[2-sec-butyl-1H-pyrrole], le poly-{2-[(4E-1,5,9-triméthyldéca-4,8-diényl]-1H-pyrrole, le poly-{2-[(2S,5R)-2-isopropyl-5-méthylcyclohexyl]-1H-pyrrole}, le poly-[2-sec-butyl-1H-pyrrole].

3. Procédé de préparation de composés polymères de pyrrole à chaîne linéaire de formule générale (A), comprenant les étapes suivantes :
- le mélange d'une quantité équimolaire de pyrrole et d'un composé ayant un groupe fonctionnel aldéhyde ou cétone dans un solvant approprié (en fonction de la quantité de réactifs), en maintenant la solution sous agitation sous un courant de gaz inerte,
- l'addition à la solution d'une quantité d'acides de Lewis, tels que BF₃ ou AlCl₃, et/ou d'acides forts, tels que l'acide trifluoroacétique, ladite quantité étant déterminée de manière à provoquer une réaction complète des réactifs.

4. Procédé selon la revendication 3, comprenant en outre l'étape suivante, faisant suite à l'étape d'addition d'acides,
- une purge par une série de lavages avec un solvant organique.

5. Procédé selon la revendication 4, dans lequel ledit solvant organique de lavage est choisi entre l'éther de pétrole, le méthanol, le chloroforme, utilisé seul ou en combinaison.

6. Procédé selon l'une quelconque des revendications 3 - 5, dans lequel ledit solvant de dilution des réactifs est choisi entre le chloroforme et le dichlorométhane, seul ou en combinaison.

7. Utilisation des composés polymères de pyrrole tels que définis dans l'une quelconque des revendications 1 et 2 comme capteurs.

8. Utilisation des composés polymères de pyrrole tels que définis dans l'une quelconque des revendications 1 et 2 comme matrice active de capteurs nanogravimétriques.

9. Utilisation des composés polymères de pyrrole tels que définis dans l'une quelconque des revendications 1 et 2 comme matrice active de capteurs nanogravimétriques sur du quartz oscillant.

10. Procédé de dépôt de composés polymères de pyrrole à chaîne linéaire de formule générale (A) sur un substrat par le procédé de Langmuir Blodget.

11. Procédé de dépôt de composés polymères de pyrrole à chaîne linéaire de formule générale (A) sur un substrat par un procédé de coulage par pulvérisation.

12. Procédé de dépôt de composés polymères de pyrrole tels que définis dans la revendication 1 ou 2 sur un substrat, comprenant les étapes suivantes :
- le dépôt à la surface dudit substrat d'une solution équimolaire de pyrrole et d'un composé ayant un groupe fonctionnel aldéhyde ou cétone dans du chloroforme,
- le soufflage d'air saturé de vapeurs d'acides de Lewis, tels que BF₃, et/ou d'acides forts, tels que l'acide trifluoroacétique, à la surface du substrat, jusqu'à l'achèvement de la polymérisation, mise en évidence par le changement de couleur de la surface,
- le lavage avec un solvant organique.

13. Procédé de dépôt de composés polymères de pyrrole sur un substrat, selon la revendication 12, ledit solvant organique de lavage étant choisi entre l'acétone et le chloroforme, seul ou en combinaison.

14. Capteur à base de composé polymère de pyrrole tel que défini dans la revendication 1 ou 2.

15. Capteur nanogravimétrique dans lequel la matrice active est constituée d'un composé polymère de pyrrole tel que défini dans la revendication 1 ou 2.

16. Capteur nanogravimétrique sur quartz oscillant dans lequel ledit quartz oscillant est au moins partiellement revêtu d'un composé polymère de pyrrole selon la revendication 1 ou 2.

17. Quartz oscillant au moins partiellement revêtu d'un composé polymère de pyrrole selon la revendication 1 ou 2.
